# EUROPÄISCHE PATENTANMELDUNG

(11) **EP 2 390 599 A2**
(43) Veröffentlichungstag der Anmeldung: **30.11.2011**
(21) Anmeldenummer: 11004012.8
(22) Anmeldetag: 14.05.2011
(51) Int. Cl.: F24J 2/52, H01L 31/042, H01L 31/048

(54) **Solaranlage mit mehreren flächigen Solarmodulen**

(30) Priorität: 27.05.2010 DE 202010005505 U
(71) Anmelder: Habdank PV-Montagesysteme GmbH & Co. KG, 73037 Göppingen (DE)
(72) Erfinder: Habdank, Martin, 73092 Heiningen (DE); Habdank, Peter, 73092 Heiningen (DE)
(74) Vertreter: Ruckh, Rainer Gerhard

(57) **Zusammenfassung**

Die Erfindung betrifft eine Solaranlage mit mehreren flächigen Solarmodulen (SR, SU1, SU2). Diese besitzen jeweils eine einer Traganordnung zugewandte und auf einer Auflagefläche (AF1) der Traganordnung aufliegende Rückseite (RS) und eine der Traganordnung abgewandte Vorderseite (VS) an mehreren entlang der Modulränder beabstandet angeordneten Haltepositionen über Halterungen an Anlageflächen der Traganordnung gehalten sind. Wobei dieHalterungen jeweils wenigstens ein an einer Modulseite anliegendes Halteelement (HE1) und eine mit dem Halteelement (HE1) zusammen wirkende Befestigungsschraube (SC) enthalten. Das Halteelement (HE1) ist so ausgebildet ist, dass die an einer Anlagefläche der Traganordnung befestigte Befestigungsschraube (SC) nicht auf Biegung beansprucht ist.

## Beschreibung

Die Erfindung betrifft eine Solaranlage mit flächigen Solarmodulen.

Solaranlagen mit flächigen Solarmodulen enthalten typischerweise eine für mehrere Solarmodule gemeinsame Traganordnung, welche auf einem Untergrund vorbereitet wird und auf welcher die Solarmodule aufgelegt und über mehrere Halterungen befestigt werden. Gebräuchliche Traganordnungen enthalten langgestreckte Modulträgerpofile, welche horizontal oder geneigt verlaufend können und welche Gegenflächen bilden, auf welchen die Solarmodule mit ihren Rückseiten aufliegen. Halterungen an mehreren voneinander beabstandeten Haltepositionen entlang der Modulränder enthalten Halteelemente, welche mit einem Halteschenkel über der der Traganordnung abgewandten Vorderseite der Solarmodule liegen und mittels Befestigungsschrauben in Richtung der Traganordnung gezogen sind.

Die Halterungen können vorteilhafterweise so gestaltet sein, dass für die Positionierung der Solarmodule auf der Traganordnung die Solarmodule auch bei bereits angelegten Halterungen in wenigstens einer Richtung in der Auflagefläche noch verschiebbar sind. Relativ zu den Modulträgerprofilen sind die Haltepositionen vorteilhafterweise frei wählbar.

Der vorliegenden Erfindung liegt die Aufgabe zugrunde, eine hinsichtlich der Befestigung der Solarmodule auf der Traganordnung weiter verbesserte Solaranlage anzugeben.

Erfindungsgemäße Lösungen sind in den unabhängigen Ansprüchen beschrieben. Die abhängigen Ansprüche enthalten vorteilhafte Ausgestaltungen und Weiterbildungen der Erfindung.

Die Erfindung betrifft eine Solaranlage mit mehreren flächigen Solarmodulen. Diese besitzen jeweils eine einer Traganordnung zugewandte und auf einer Auflagefläche der Traganordnung aufliegende Rückseite und eine der Traganordnung abgewandte Vorderseite und sind an mehreren entlang der Modulränder beabstandet angeordneten Haltepositionen über Halterungen an Anlageflächen der Traganordnung gehalten. Die Halterungen enthalten jeweils wenigstens ein an einer Modulseite anliegendes Halteelement und eine mit dem Halteelement zusammen wirkende Befestigungsschraube. Das Halteelement ist so ausgebildet, dass die an einer Anlagefläche der Traganordnung befestigte Befestigungsschraube nicht auf Biegung beansprucht ist.

Ein wesentlicher Vorteil der erfindungsgemäßen Halterung besteht darin, dass dadurch, dass auf die Befestigungsschraube keine Biegemomente wirken, einerseits ein sehr sicherer Halt der Solarmodule an der Traganordnung erzielt wird. Andererseits werden Beschädigungen der Halterung, die durch Auftreten von Biegemomenten auf die Halterungen stattfinden könnten, vermieden.

Die erfindungsgemäßen Halterungen können je nach Applikation in Unterschiedlichen konstruktiven Ausgestaltungen ausgebildet sein.

Insbesondere können mehrere der folgenden Halterungen vorhanden sein:
a) Eine erste Halterung mit einem ersten Halteelement. Dieses Halteelement liegt mit einem Halteschenkel über der Vorderseite eines Solarmoduls und mit einem Befestigungsschenkel parallel zu einer Anlagefläche der Traganordnung, wobei es gegen diese verschraubt ist. Von dem Halteschenkel führt ein Mittelschenkel in Richtung der Traganordnung zu dem Befestigungsschenkel.
b) Eine zweite Halterung mit einem zweiten Halteelement. Dieses Halteelement liegt mit einem Halteschenkel über der Vorderseite eines Solarmoduls und mit einem über einen Mittelschenkel mit dem Halteschenkel verbundenen Befestigungsschenkel parallel zu einer Anlagefläche der Traganordnung, wobei es gegen eine zwischen die Anlagefläche und den Befestigungsschenkel eingefügte Zwischenplatte verschraubt ist. Das Halteelement stützt sich zwischen der Zwischenplatte und dem Modulrand mit einem Fortsatz gegen die Anlagefläche der Traganordnung ab.
c) Eine dritte Halterung mit einem dritten Halteelement. Dieses Halteelement liegt mit einem Halteschenkel über der Vorderseite eines Solarmoduls. Weiter weist es an einem seitlich gegen den Rand des Solarmoduls versetzten und mit dem Halteabschnitt fest verbundenen Befestigungsabschnitt zwei eine zwischen Befestigungsabschnitt und Traganordnung verlaufende Befestigungsschraube zwischen sich einschließende Fortsätze auf. Mit diesen ist das Solarmodul gegen eine Gegenfläche der Traganordnung abgestützt.
d) Eine vierte Halterung mit einem fünften Halteelement. Dieses Halteelement liegt mit einem Halteschenkel über der Vorderseite eines Solarmoduls und ist über eine Befestigungsschraube mit einem vierten Halteelement verbunden. Das vierte Halteelement hintergreift eine von dem Solarmodul weg weisende Haltekante eines Modulträgers der Traganordnung und stützt sich auf der bezüglich der Befestigungsschraube der Haltekante abgewandten Seite an der Rückseite des Solarmoduls ab.

Weiterhin kann wenigstens eine der Halterungen ein erstes und ein zweites Klemmteil enthalten, von welchen das erste Klemmteil auf der Traganordnung aufliegt und eine Anlagefläche für die Rückseite des Solarmoduls bildet. Das zweite Klemmteil liegt an der Vorderseite des Solarmoduls an und ist mittels einer Befestigungsschraube gegen die Traganordnung verspannt. Zwischen der Rückseite des Solarmoduls und der Traganordnung liegt das zweite Klemmteil ein.

Gemäß dem erfindungsgemäßen Verfahren zur Herstellung eines Halteelements einer Halterung zur Befestigung von Solarmodulen an einer Traganordnung, wird das Halteelement mittels nur eines Werkzeugs aus einem Stranggußprofil hergestellt.

Dadurch ist eine kostengünstige Herstellung der Halterungen möglich. Insbesondere wird durch dieses Verfahren eine rationelle Serienfertigung der Halterungen ermöglicht.

Besonders vorteilhaft können unterschiedliche Varianten des Halteelements mit diesem Werkzeug hergestellt werden.

Da somit nur ein Werkzeug zur Herstellung unterschiedlicher Halterungen benötigt wird, wird ein erheblicher Rationalisierungseffekt bei der Herstellung der Halterungen erzielt.

Die verschiedenen Arten der Halterungen können unterhalb einer Solaranlage in einheitlicher Ausführung oder auch in Kombination verschiedener Ausführungen realisiert sein.

Die Erfindung ist nachfolgend anhand bevorzugter Ausführungsbeispiele unter Bezugnahme auf die Abbildungen noch eingehend veranschaulicht. Dabei zeigt:
- Figur 1:: eine erste Halterung mit einem ersten Halteelement,
- Figur 2:: eine bevorzugte Ausführung eines ersten Halteelements nach Figur 1,
- Figur 3:: eine weitere Ausführung eines ersten Halteelements,
- Figur 4:: eine zweite Halterung mit einem zweiten Halteelement,
- Figur 5:: eine Halterung mit einem ersten und einem zweiten Halteelement,
- Figur 6:: eine dritte Halterung mit einem dritten Halteelement,
- Figur 7:: ein fünftes Halteelement,
- Figur 8:: eine Halterung mit einem fünften Halteelement,
- Figur 9:: die Halterung nach Fig. 8 in Seitenansicht,
- Figur 10:: eine Halterung mit einem zweiteiligen Halteelement.

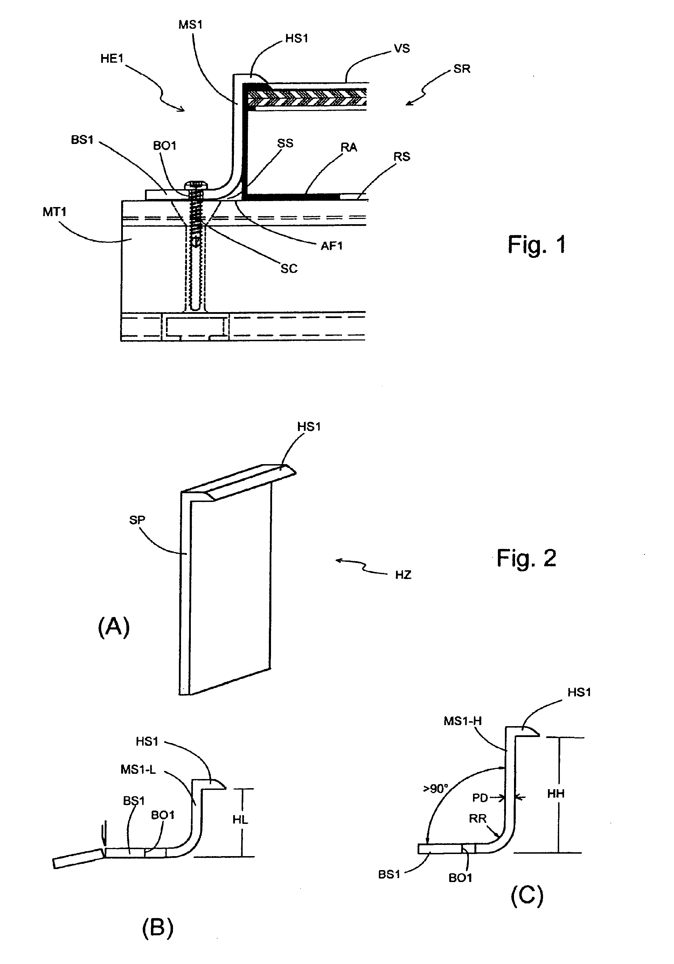

Figur 1 zeigt eine erste Halterung mit einem ersten Halteelement HE1, welches mittels einer Befestigungsschraube SC mit einem Modulträgerprofil MT1, nachfolgend auch kürzer als Modulträger bezeichnet, verbunden ist. Ein gerahmtes Solarmodul SR, welches mit seiner Rückseite RS auf einer Auflagefläche AF1 des Modulträgerprofils MT1 aufliegt, ist mittels des Halteelements HE1 klemmend auf dem Modulträger MT1 gehalten.

Das erste Halteelement HE1 besitzt einen Halteschenkel HS1, welcher über der Vorderseite VS des Solarmoduls SR liegt. Ein über einen Mittelschenkel MS1 des Halteelements HE1 mit dem Halteschenkel HS1 verbundener Befestigungsschenkel BS 1 ist mittels der Befestigungsschraube SC gegen den Modulträger MT1 verspannt. Der Befestigungsschenkel BS1 verläuft annähernd parallel zu der Auflagefläche AF1 des Modulträgers MT1, ist aber vorzugsweise um einen kleinen Winkel in der Größenordnung von vorteilhafterweise 0,5° bis 1° so gegen die Auflagefläche AF1 geneigt, dass das dem Solarmodul SR abgewandte freie Ende des Befestigungsschenkels BS1 auf der Auflagefläche AF1 aufliegt und das dem Solarmodul SR zugewandte Ende des Befestigungsschenkels BS1 durch einen geringen Spalt SS von der Auflagefläche AF1 beabstandet und bei angezogener Befestigungsschraube SC elastisch verspannt ist. Eine solche Halterung ist insbesondere vorteilhaft für die Befestigung von gerahmten Solarmodulen SR auf dem Modulträger MT1, bei welchen auf den formstabilen Rahmen RA hohe Kräfte zwischen dem Halteschenkel HS1 und der Auflagefläche AF1 des Modulträgers MT1 ausgeübt werden können.

Die Verschraubung des Halteelements HE1 über die Befestigungsschraube kann auf unterschiedliche, an sich bekannte Arten erfolgen. Insbesondere kann die Schraube als eine Bohrschraube ausgeführt sein, welche in die Auflagefläche AF1 eingebohrt und eingeschraubt wird. In anderer bekannter Ausführung kann die Befestigungsschraube in einen Schraubkanal des Modulträgerprofils eingeschraubt oder mit einem hinter der Auflagefläche AF1 angeordneten, gesonderten Gegenelement wie beispielsweise einer Schraubenmutter zusammenwirken. In dem Befestigungsschenkel BS1 ist vorteilhafterweise eine Bohrung BO1 vorbereitet, in welcher die Befestigungsschraube BS frei drehbar ist. Die Befestigung des Halteelements HE1 auf dem Modulträger MT1 gestaltet sich vorteilhafterweise einfach, indem das Halteelement HE1 mit dem Halteschenkel HS1 auf die Vorderseite VS des Rahmens des Solarmoduls und mit dem Mittelschenkel MS1 an die Seitenfläche des Rahmens RA angelegt und die Befestigungsschraube durch die Bohrung BO1 in den Modulträger MT1 eingeschraubt wird. Solange die Befestigungsschraube SC nicht angezogen ist, kann das Solarmodul SR noch in Richtung senkrecht zur Zeichenebene relativ zu dem Modulträger MT1 verschoben und dadurch noch eine Positionskorrektur in dieser Richtung vorgenommen werden.

Figur 2 zeigt eine vorteilhafte Ausführung eines ersten Halteelements HE1 nach Figur 1. Dabei ist in Figur 2(A) ein Halbzeug HZ dargestellt, welches insbesondere ein Strangpressprofil bzw. ein Abschnitt aus einem solchen sein kann. Das in Figur 2 dargestellte Halbzeug HZ besitzt den Halteschenkel HS1 und um zumindest annähernd 90° gegen diesen abgewinkelt eine Schenkelplatte SP, welche in sich eben und im skizzierten, bevorzugten Ausführungsbeispiel mit konstanter Dicke ausgeführt ist. Die Schenkelplatte SP beinhaltet einen dem Halteschenkel HS 1 zugewandten Abschnitt, welcher den Mittelschenkel MS1 des Halteelements HE1 bildet, sowie einen dem Halteschenkel HS1 abgewandten Abschnitt, welcher den Befestigungsschenkel BS1 bildet. Die Schenkelplatte SP wird durch Umbiegen des dem Halteschenkel HS1 abgewandten Abschnitts dauerhaft umgeformt in das Halteelement HE1 mit gegenüber dem Mittelschenkel MS1 umgebogenem Befestigungsschenkel BS 1.

Durch diese Art der Herstellung des Halteelements HE1 können aus demselben Halbzeug HZ nach Figur 2(A) erste Halteelemente HE1 mit unterschiedlicher Höhe, welche als Maß zwischen der dem Modulträger MT1 zugewandten Unterseite des Befestigungsschenkels BS1 und der der Vorderseite VS des Solarmoduls SR zuweisenden Unterseite des Halteschenkels HS1 definiert sein hergestellt werden. In Figur 2(B) ist ein erstes Halteelement mit kleinerer Höhe HL, in Figur 2(C) ein erstes Halteelement mit größerer Höhe HH dargestellt. Durch die auf diese Weise einfach zu erreichenden unterschiedlichen Höhen der ersten Halteelemente HE1 kann bei Vorhaltung eines einheitlichen Halbzeugs HZ nach Figur 2(A) auf besonders vorteilhafte Weise den unterschiedlichen Höhen der Modulrahmen von gerahmten Modulen je nach Hersteller Rechnung getragen werden.

Die Bohrung BO1 im Befestigungsschenkel BS1 kann vor oder nach der Umbiegung des Befestigungsschenkels BS1 gegen den Mittelschenkel MS1 hergestellt werden. Der innere Biegeradius RR der Umbiegung ist vorteilhafterweise wenigstens gleich der Plattendicke PD der Schenkelplatte SP im Bereich der Umbiegung. Bei dem Halteelement geringer Höhe HL nach Figur 2(B) kann eine Überlänge des Befestigungsschenkels BS1 abgetrennt werden wie angedeutet.

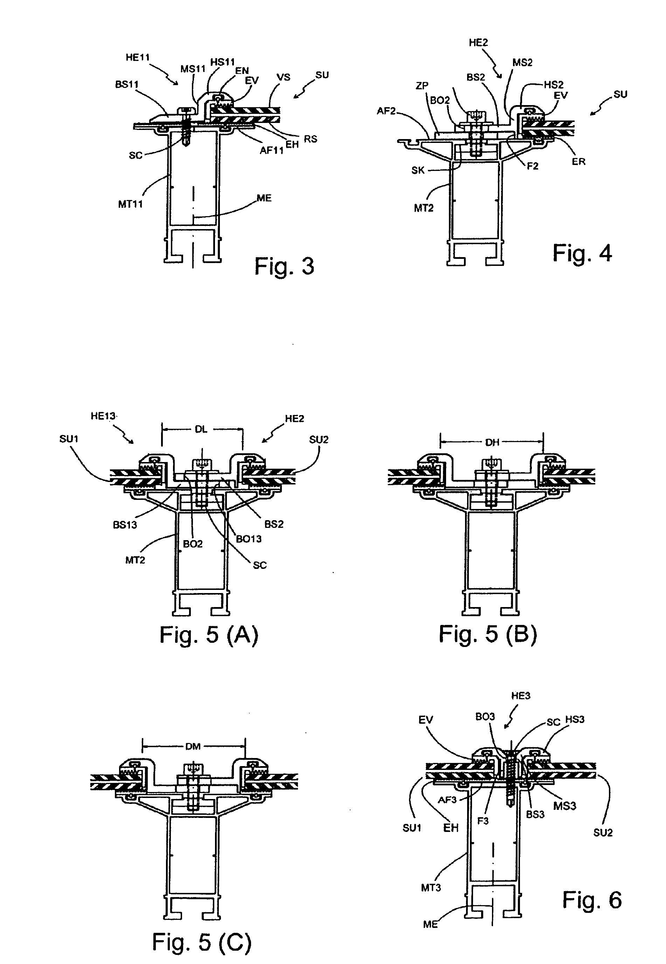

Figur 3 zeigt eine andere Ausführung eines ersten Halteelements H1, bei welchem wiederum ein Halteschenkel HS11 des Halteelements HE1 über der Vorderseite VS eines ungerahmten Solarmoduls SU liegt. Der Befestigungsschenkel BS11 des Halteelements HE11 ist einer Auflagefläche AF11 eines Modulträgers MT11 zugewandt und mittels einer Befestigungsschraube SC gegen die Auflagefläche verschraubt.

Da ungerahmte Solarmodule SU nicht in gleichem Maße belastbar sind wie der Rahmen RA des gerahmten Solarmoduls SR nach Figur 1 ist eine elastisch verformbare Zwischenlage EV zwischen den Halteschenkel HS11 und die Vorderseite VS des Solarmoduls SU eingefügt. Die Zwischenlage EV kann vorteilhafterweise in einer Nut EN des ersten Halteelements HE11 gehalten sein und kann sich auch in den Bereich zwischen der seitlichen Außenkante des Solarmoduls SU und dem Mittelschenkel MS11 des Halteelements HE1 erstrecken. In entsprechender Weise ist eine elastische Zwischenlage EH zwischen die Rückseite RS des Solarmoduls SU und die Auflagefläche AF11 des Modulträgers MT11 eingefügt, welche wiederum in einer Nut EN gehalten sein kann. Die elastische Zwischenlage EH kann sich auch in den Bereich zwischen dem Befestigungsschenkel BS11 und der Auflagefläche AF11 des Modulträgers MT11 erstrecken. Durch die geringere Höhe des Solarmoduls SU im Vergleich zu dem gerahmten Solarmodul SR nach Figur 1 ist bei dem Halteelement HE11 auch der Mittelschenkel MS 11 kürzer ausgebildet. Durch die bezüglich einer Mittelebene des Modulträgers MT11 außermittige Anordnung der Bohrschraube SC ist angedeutet, dass bei der Positionierung des Solarmoduls SU auf dem Modulträger MT11 seitlicher Spielraum besteht, was für die Montage der Solaranordnung von besonderem Vorteil ist.

Figur 4 zeigt eine zweite Halterung mit einem zweiten Halteelement HE2, welches wiederum mit einem Halteschenkel HS2 über der Vorderseite eines rahmenlosen Solarmoduls SU liegt und mit einem Befestigungsschenkel BS2 der Auflagefläche AF2 eines Modulträgers MT2 zugewandt und mittels einer Schraube SC gegen die Auflagefläche AF2 des Modulträgers MT2 verspannt ist, wobei eine Zwischenplatte ZP zwischen den Befestigungsschenkel BS2 und die Auflagefläche AF2 eingefügt ist.

An einem dem Solarmodul SU zugewandten Ende des Befestigungsschenkels BS2 ist ein Fortsatz F2 in Richtung der Auflagefläche AF2 an dem Halteelement HE2 ausgebildet, mit welchem sich das Halteelement HE2 von der Befestigungsschraube SC seitlich beabstandet gegen die Auflagefläche AF2 abstützt, wenn die Schraube SC angezogen wird. Durch den Fortsatz F2 ist der Abstand der der Vorderseite des Solarmoduls SU zugewandten Unterseite des Halteschenkels HS2 und der Auflagefläche AF2 im fest montierten Zustand definiert eingestellt. Zwischen Halteelement HE2 und Vorderseite des Solarmoduls ist wieder eine elastische Zwischenlage EV eingefügt. Eine Zwischenlage ER zwischen der Rückseite des Solarmoduls und der Auflagefläche AF2 erstreckt sich in diesem Ausführungsbeispiel nicht bis unter den Befestigungsschenkel BS2 des Halteelements HE2, so dass der Fortsatz F2 und die Zwischenplatte ZP unmittelbar auf der Auflagefläche AF2 aufliegen. Die Höhe des Fortsatzes F2 entspricht ungefähr der Dicke der Zwischenplatte ZP.

In dem in Figur 4 skizzierten Ausführungsbeispiel ist die Befestigungsschraube SC in eine Mutter in einem Schraubkanal SK des Modulträgers MT2 eingeschraubt und damit seitlich relativ zum Modulträger MT2 in fester Position. Für eine begrenzt variable seitliche Ausrichtung des Halteelements HE2 ist eine Bohrung B02 in dem Befestigungsschenkel BS2 größer ausgeführt als der Durchmesser des Schraubenschaftes. Die einander zuweisenden Flächen von Befestigungsschenkel BS2 und Zwischenplatte ZP können vorteilhafterweise jeweils gezahnt ausgeführt sein, so dass die seitliche Position des Halteelements HE2 bei angezogener Befestigungsschraube SC auch über die Verzahnung formschlüssig festgelegt ist.

Figur 5 zeigt eine Halterung, bei welcher ein erstes Halteelement HE 13 nach Art der Figur 3 und ein zweites Halteelement HE2 nach Figur 4 in bekannter Weise kombiniert sind, dass der Befestigungsschenkel BS13 des ersten Halteelements HE13 an die Stelle der Zwischenplatte ZP der Halterung nach Figur 4 tritt und zwischen dem Befestigungsschenkel BS2 des zweiten Halteelements HE2 und der Auflagefläche AF2 des Modulträgers MT2 liegt. Wegen der durch den Schraubkanal SK festgelegten seitlichen Position der Befestigungsschraube SC ist eine Bohrung BO13 in dem Befestigungsschenkel BS 13 des Halteelements HE13 in diesem Beispielsfall ebenso wie die Bohrung B02 in dem Befestigungsschenkel BS2 des zweiten Halteelements HE2 größer ausgeführt als der Durchmesser des Schraubenschaftes, so dass sowohl das erste Halteelement HE13 als auch das zweite Halteelement HE2 seitlich relativ zu der Befestigungsschraube in begrenztem Umfang verschiebbar sind. Mittels des ersten Halteelements HE13 ist ein erstes Solarmodul SU1 und mittels des zweiten Halteelements HE2 ein zweites Solarmodul SU2 auf dem Modulträger MT2 gehalten, wobei wie in dem Beispiel nach Fig. 4 zwischen die Halteschenkel HS2 der Halteelemente HE2 und die Vorderseite VS der Solarmodule SR einerseits und zwischen die Rückseite RS der Solarmodule SR und die Auflagefläche AF2 des Modulträgers MT2 wiederum elastische Zwischenlagen EH eingefügt sind. Durch die begrenzt veränderbare seitliche Position der Halteelemente HE13, HE2 relativ zu der Befestigungsschraube SC können Variationen der den Halteelementen HE13, HE2 zuweisenden Außenkanten der Solarmodule SU1, SU2 durch entsprechende seitliche Einstellung der Halteelemente HE13, HE2 ausgeglichen werden, so dass sowohl die Weite des Zwischenraums zwischen den einander zuweisenden Kanten der Solarmodule SU1, SU2 als auch die seitliche Position dieses Zwischenraums variieren können. In Figur 5(A) ist eine Situation mit minimaler Weite DL des Zwischenraums zwischen den einander zuweisenden Außenkanten der Solarmodule SU1, SU2 dargestellt. Figur 5(B) zeigt eine Situation mit maximaler Weite DH des Zwischenraums zwischen den einander zuweisenden Außenkanten der Solarmodule SU und Figur 5(C) zeigt eine Situation, in welcher zwischen den Außenkanten der Solarmodule SU ein zwischen minimaler Weite DL und maximaler Weite DH liegender mittlerer Abstand DM gegeben ist, die Außenkanten der Solarmodule SU aber nicht symmetrisch bezüglich der Befestigungsschraube liegen und der Zwischenraum daher bezüglich der Befestigungsschraube dezentriert liegt.

Die einander zuweisenden Flächen des Befestigungsschenkels BS13 des ersten Halteelements HE13 und des Befestigungsschenkels BS2 des zweiten Halteelements HE2 sind vorteilhafterweise jeweils gezahnt, so dass nach Festziehen der Befestigungsschraube BS13, BS2 die an die jeweilige Weite DL, DM, DH des Zwischenraums zwischen den Solarmodulen SU angepasste seitliche Position der Halteelemente HE13, HE2 relativ zueinander formschlüssig festgelegt ist. Eine gemeinsame seitliche Verschiebung der beiden Halteelemente HE13, HE2 ist durch die an den Mittelschenkeln jeweils anliegenden Solarmodule SU verhindert.

Figur 6 zeigt eine dritte Halterung mit einem dritten Halteelement HE3, welches vorteilhafterweise zur gleichzeitigen Halterung zweier Solarmodule SU1, SU2 ausgebildet ist. Das dritte Halteelement HE3 besitzt zwei Halteschenkel HS3, welche vorzugsweise spiegelsymmetrisch bezüglich einer Mittelebene des Halteelements HE3 angeordnet sind. Eine Befestigungsschraube SC3 ist durch eine Bohrung B03 in einem die beiden Halteschenkel HS3 verbindenden Befestigungsschenkel BS3 hindurchgeführt. Für den Modulträger MT3 ist wieder die Form des Modulträgers MT11 gewählt. Zwei Fortsätze F3 sind vorgesehen, mittels welcher das dritte Halteelement HE3 beim Anziehen der Befestigungsschraube BS3 gegen die Auflagefläche AF3 des Modulträgers MT3 gedrückt wird und welche einen definierten Abstand zwischen der Auflagefläche AF3 und den Halteschenkeln HS3 einstellt. Das Halteelement HE3 ist im skizzierten Beispiel wie das Halteelement HE11 nach Figur 3 mittels einer Bohrschraube als Befestigungsschraube SC innerhalb der Breite des Modulträgers MT3 in unterschiedlichen seitlichen Positionen befestigbar. Das dritte Halteelement HE3 ist insbesondere von Vorteil als Halteelement zwischen zwei seitlich beabstandet angeordneten Solarmodulen SU1, SU2, ist aber auch am Rand von nur einem Solarmodul SU1, SU2 verwendbar. Die Befestigungsschraube SC ist im skizzierten Beispiel vorteilhafterweise gegen die den Solarmodulen SU1, SU2 abgewandte obere Begrenzungsebene des dritten Halteelements HE3 abgesenkt angeordnet und kann insbesondere als Senkkopfschraube ausgeführt sein, welche an schrägen Flanken des Halteelements HE3 in einem Mittelschenkel MS3 zwischen Halteschenkel HS3 und Befestigungsabschnitt BS3 anliegt.

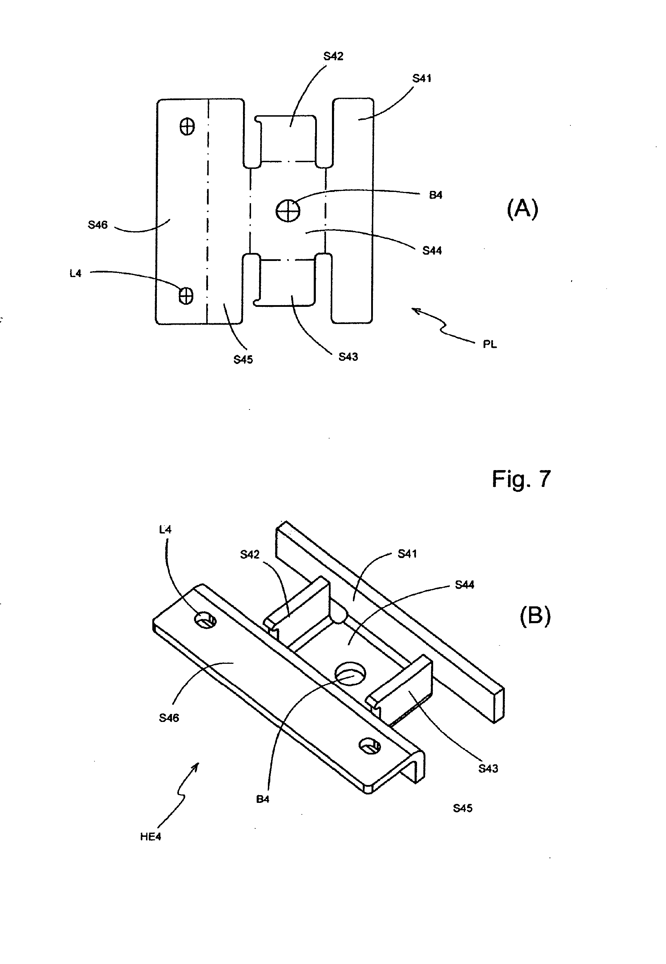

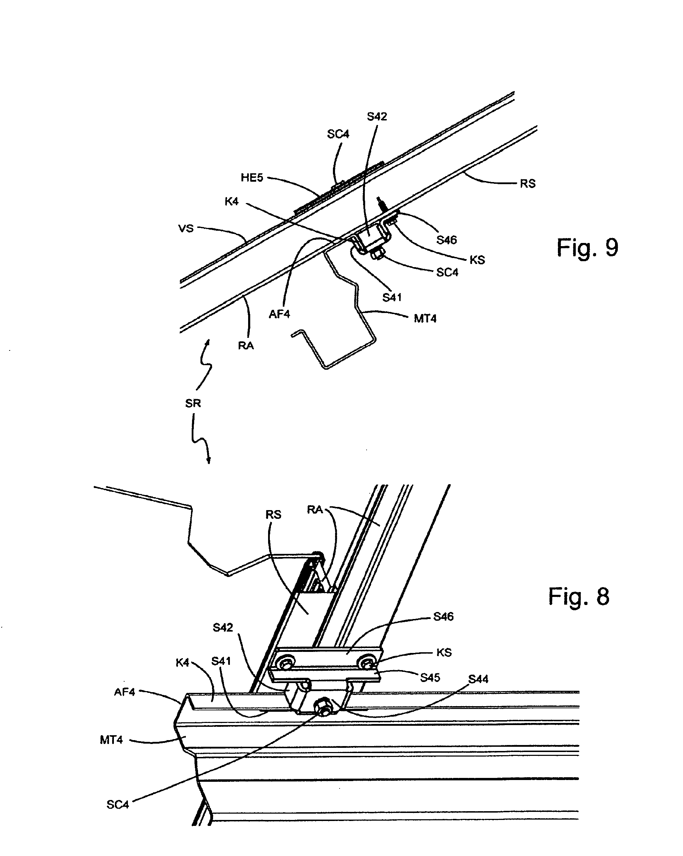

Figur 7 zeigt ein viertes Halteelement HE4, welches in einer Halterung, die in Figur 8 von schräg unten und in Figur 9 in Seitenansicht dargestellt ist, vorteilhaft zum Einsatz kommen kann. Das vierte Halteelement HE4 ist an der Rückseite RS der Solarmodule SR angeordnet und wirkt mit einem fünften Halteelement HE5, welches mit einem oder zwei Halteschenkeln über der Vorderseite VS eines oder zweier Solarmodule SR liegt, zusammen. Das vierte Halteelement HE4 dient zur Herstellung einer Verbindung zu einem Modulträger MT4, ohne dass eine Befestigungsschraube in den Modulträger MT4 eingeschraubt werden muss, was insbesondere bei einem in Figur 8 und Figur 9 dargestellten vorteilhaften Modulträger MT4 aus einem Stahlblechprofil günstig sein kann.

Das in Figur 7(B) in Schrägansicht dargestellte vierte Halteelement HE4 kann vorteilhafterweise aus einer in Figur 7(A) dargestellten ebenen Platte PL durch Abkanten mehrerer Plattenabschnitte S41 bis S46 relativ zueinander an den mit in Figur 7(A) unterbrochenen Linien hergestellt werden. In einem mittleren Abschnitt S44 des vierten Halteelements HE4 ist mit B4 eine Position für eine Befestigungsschraube gekennzeichnet, wobei diese Position vorteilhafterweise durch eine in dem Halteelement HE4 vorbereitete Bohrung für den Durchgriff eines Schraubenschaftes gebildet ist. Das vierte Halteelement HE4 ist insbesondere vorteilhaft zur Befestigung von Solarmodulen SR auf Modulträgern MT4, welche eine von der Auflagefläche AF4 weg weisende Haltekante K4 aufweisen. Solche Modulträger MT4 können insbesondere in vorteilhafter Ausführung durch ein aus einem ebenen Blech umgeformtes Blechprofil gebildet sein.

Im montierten Zustand nach Figur 8 und Figur 9 hintergreift ein erster Stützschenkel S41 des Halteelements HE4 die Haltekante K4 des Modulträgers MT4. Seitenschenkel S42, S43 liegen auf der dem Stützschenkel S41 abgewandten Seite der Haltekante K4, welche dadurch mit vorteilhafterweise geringem Spiel zwischen dem Stützschenkel S41 und den Seitenschenkeln S42, S43 einliegt. Der Stützschenkel S41 stützt sich im montierten Zustand mit seiner dem Mittelabschnitt S44 abgewandten Kante gegen die dem Solarmodul SR abgewandte Seite der Auflagefläche AF4 ab. Ein zweiter Stützschenkel S45, welcher sich auf der der Haltekante K4 abgewandten Seite der Seitenschenkel S42, S43 von dem mittleren Abschnitt S44 in Richtung des Solarmodus SR erstreckt, geht über eine weitere Abkantung in den Auflageschenkel S46 über, welcher an der Rückseite des Solarmoduls SR anliegt. Eine Befestigungsschraube SC4 reicht von einem an der Vorderseite VS des Solarmoduls SR angeordneten fünften Halteelement HE5 entlang einer Außenkante des Solarmoduls SR bis durch den mittleren Abschnitt S44 hindurch und ermöglicht die Verspannung des fünften Halteelements HE5 und des vierten Halteelements HE4 senkrecht zur Modulebene des Solarmoduls SR, wobei der Auflageschenkel S46 an der Rückseite RS des Solarmoduls SR, insbesondere einem Rahmen RA eines gerahmten Solarmoduls SR anliegt. Zwischen den Auflageschenkel S46 und die Rückseite des Solarmoduls SR kann vorteilhafterweise eine Zwischenlage EV, EH eingefügt sein, welche elastisch verformbar und/oder rutschhemmend ausgebildet ist, wobei die rutschhemmende Ausbildung dahingehend zu verstehen ist, dass die Haftreibungskraft zwischen dem Auflageschenkel S46 und der Rückseite RS des Solarmoduls SR unter Zwischenfügen der rutschhemmenden Zwischenlage höher ist als bei direktem Kontakt der Rückseite RS des Solarmoduls SR mit dem Auflageschenkel S46 des vierten Halteelements HE4. Vorteilhafterweise kann bei durch das vierte Halteelement HE4 und das fünfte Halteelement HE5 durchgeführter, aber noch nicht angezogener Befestigungsschraube SC4 das Solarmodul SR noch parallel zur Modulebene in alle Richtungen für Positionskorrekturen verschoben werden. Beim Anziehen der Befestigungsschraube SC4 wird das fünfte Halteelement HE5 gegen die Vorderseite VS des Solarmoduls SR und die Rückseite RS des Solarmoduls SR gegen die Auflagefläche AF4 und den Auflageschenkel S46 gedrückt. Die Seitenschenkel S42, S43 sind von der Rückseite RS des Solarmoduls SR beabstandet und nicht gegen dieses abgestützt.

Mittels einer Schraube KS, welche eine der Öffnungen LU in dem Auflageschenkel S46 durchgreift und in die Rückseite RS des Rahmens RA des Solarmoduls SR eingeschraubt ist, kann vorteilhafterweise eine zuverlässige elektrische Masseverbindung zwischen dem Rahmen RA und der Traganordnung hergestellt werden.

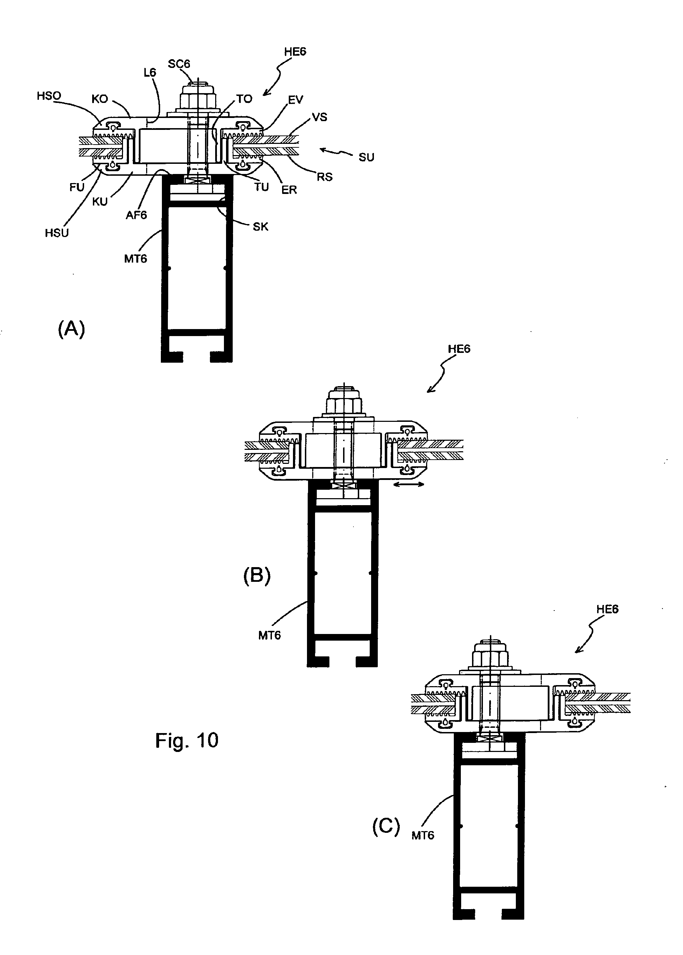

Figur 10 zeigt eine weitere Ausführungsform der Erfindung, bei welcher ein Halteelement HE6 aus zwei gegeneinander verklemmbaren Klemmteilen KU und KO besteht. Das einem Modulträger MT6 der Traganordnung zugewandt angeordnete Klemmteil KU liegt auf einer Fläche AF6 des Modulträgers MT6 an. Seitlich nach außen ragende Halteschenkel HSU des Klemmteils KU bilden mit Solarmodulen SU zuweisenden Flächen FU die Anlageflächen, welche bei den vorangegangenen Beispielen an den Modulträgern MT6 selbst ausgebildet waren. Zwischen die Flächen FU und die Solarmodule SU können vorteilhafterweise wieder elastische Zwischenlagen ER eingefügt sein. Das zweite, dem Modulträger MT6 abgewandt angeordnete Klemmteil KO überdeckt mit Halteschenkeln HSO die Vorderseiten VS der Solarmodule SU, wobei auch hier wiederum eine elastische Zwischenlage EV zwischen die Halteschenkel HSO und die Vorderseite VS der Solarmodule SU eingefügt ist.

Über eine Befestigungsschraube SC6, welche Aussparungen L6 in dem ersten KO und dem zweiten Klemmteil KU durchgreift, sind die beiden Klemmteile KO, KU gegeneinander und gegen den Modulträger MT6 verspannbar. Die Befestigungsschraube SC6 ist im skizzierten Beispiel als mit einem Schraubenkopf in einem Schraubenkanal SK des Modulträgers MT6 einliegend ausgeführt.

Das Klemmteil KU weist von den Flächen FU in Richtung des zweiten Klemmteils KO abstehend Fortsätze TU auf, welche als seitliche Anlageflächen für die elastischen Zwischenlagen ER und die Seitenkanten der Solarmodule SU wirken und so die Position der Solarmodule SU in seitlicher Richtung festlegen. Von dem zweiten Klemmteil KO in Richtung des ersten Klemmteils KU abstehende Fortsätze TO liegen in seitlicher Richtung innerhalb des Zwischenraums zwischen den Fortsätzen TU, so dass das obere Klemmteil KO im montierten Zustand automatisch bezüglich des unteren Klemmteils KU in seitlicher Richtung zentriert positioniert ist.

Während anfänglich bei auf die elastischen Zwischenlagen ER aufgelegten Solarmodulen SU und auf das auf dem Modulträger MT6 aufliegende Klemmteil KU aufgesetztem zweitem Klemmteil KO die elastischen Zwischenlagen ER und EV nicht oder kaum verformt sind und die beiden Klemmteile KU, KO senkrecht zur Ebene der Solarmodule SU weiter voneinander beabstandet sind als in Figur 10 dargestellt, werden beim Anziehen der Befestigungsschraube SC6 bzw. der auf dieser aufgeschraubten Schraubenmutter die beiden Klemmteile KO, KU in Längsrichtung der Schraube SC6, also senkrecht zur Ebene der Solarmodule SU aufeinander zu verlagert, bis die dem zweiten Klemmteil KO abgewandten Enden der Vorsprünge TO an dem ersten Klemmteil KU anliegen und auf diese Weise einen Minimalabstand der Halteschenkel HSU, HSO im fertig montierten Zustand bestimmen. Hierdurch ist gewährleistet, dass auf die ungerahmten Solarmodule SU lediglich Kräfte ausgeübt werden, welche im Rahmen der elastischen Verformung der Zwischenlagen ER, EV auftreten.

Die zu beiden Seiten der Befestigungsschraube SC6 angeordneten Fortsätze TO des zweiten Klemmteils KO sind in seitlicher Richtung um ein mehrfaches des Schraubendurchmessers voneinander beabstandet. Hierdurch wird zum einen gewährleistet, dass die beiden Klemmteile KU, KO im fertig montierten Zustand in stabiler relativer Position gegeneinander abgestützt sind. Dies ermöglicht insbesondere die Verwendung des Halteelements HE6 auch zur Halterung nur eines Solarmoduls SU, wobei der Zwischenraum zwischen den jeweils anderen Halteschenkeln HSO, HSU frei bleibt.

Der ein mehrfaches des Schraubendurchmessers betragende seitliche Abstand der Fortsätze TO ermöglicht darüber hinaus vorteilhafterweise eine in seitlicher Richtung variable Positionierung des Halteelements HE6 und damit der über dieses gehaltenen Solarmodule SU relativ zu dem Modulträger MT6. Hierbei sind vorteilhafterweise Langlöcher L6 in beiden Klemmteilen KU, KO des Halteelements HE6 ausgebildet, so dass das Halteelement HE6 mit darin gehaltenen Solarmodulen SU in einem anfänglichen Montagezustand mit nur loser Verschraubung noch relativ zu dem Modulträger MT6 seitlich um ein begrenztes Maß verschoben werden kann. Figur 10(A) zeigt eine Positionierung des Halteelements HE6 in einer nach links verschobenen Endstellung der variablen Positionierbarkeit. In Figur 10(B) ist eine Mittelstellung der seitlichen Positionierbarkeit des Halteelements HE6 und in Figur 10(C) eine demgegenüber weiter nach rechts versetzte Endstellung der variablen Positionierbarkeit dargestellt. Für die Verschraubung des Halteelements HE6 auf einem Modulträger MT6 sind verschiedene, an sich bekannte weitere Ausführungsformen möglich.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar. Insbesondere können die Öffnungen oder Bohrungen BO1, B02, B03, BO13 in den Befestigungsschenkeln BS1, BS11, BS2, BS13, S3, der Haltelemente HE1, HE11, HE2, HE13, HE3, HE4, HE5, HE6 auch als Langlöcher ausgeführt sein.

## Patentansprüche

1. Solaranlage mit mehreren flächigen Solarmodulen (SR, SU1, SU2), welche jeweils eine einer Traganordnung zugewandte und auf einer Auflagefläche (AF1) der Traganordnung aufliegende Rückseite (RS) und eine der Traganordnung abgewandte Vorderseite (VS) besitzen und an mehreren entlang der Modulränder beabstandet angeordneten Haltepositionen über Halterungen an Anlageflächen der Traganordnung gehalten sind, wobei die Halterungen jeweils wenigstens ein an einer Modulseite anliegendes Halteelement (HE1) und eine mit dem Halteelement (HE1) zusammen wirkende Befestigungsschraube (SC) enthalten, **dadurch gekennzeichnet, dass** das Halteelement (HE1) so ausgebildet ist, dass die an einer Anlagefläche der Traganordnung befestigte Befestigungsschraube (SC) nicht auf Biegung beansprucht ist.

2. Solaranlage nach Anspruch 1, **dadurch gekennzeichnet, dass** eine oder mehrere der folgenden Halterungen vorhanden sind:
a) eine erste Halterung mit einem ersten Halteelement (HE1, HE11), welches mit einem Halteschenkel (HS1, HS11) über der Vorderseite (VS) eines Solarmoduls (SR, SL) liegt und mit einem Befestigungsschenkel (BS1,BS11) parallel zu einer Anlagefläche der Traganordnung liegt und gegen diese verschraubt ist und einen von dem Halteschenkel in Richtung der Traganordnung zu dem Befestigungsschenkel führenden Mittelschenkel (MS1, MS11) besitzt,
b) eine zweite Halterung mit einem zweiten Halteelement (HE2), welches mit einem Halteschenkel (HS2) über der Vorderseite eines Solarmoduls liegt und mit einem über einen Mittelschenkel mit dem Halteschenkel verbundenen Befestigungsschenkel (BS2) parallel zu einer Anlagefläche (AF2) der Traganordnung liegt und gegen eine zwischen die Anlagefläche und den Befestigungsschenkel eingefügte Zwischenplatte (ZP) verschraubt ist und sich zwischen der Zwischenplatte und dem Modulrand mit einem Fortsatz (F2) gegen die Anlagefläche der Traganordnung abstützt,
c) eine dritte Halterung (H3) mit einem dritten Halteelement (HE3), welches mit einem Halteschenkel (HS3) über der Vorderseite eines Solarmoduls (SU1, SU2) liegt und an einem seitlich gegen den Rand des Solarmoduls versetzten und mit dem Halteabschnitt fest verbundenen Befestigungsabschnitt (BS3) zwei eine zwischen Befestigungsabschnitt und Traganordnung verlaufende Befestigungsschraube zwischen sich einschließende Fortsätze (F3) aufweist und mit diesen gegen eine Gegenfläche (AF3) der Traganordnung abgestützt ist,
d) eine vierte Halterung mit einem fünften Halteelement, welches mit einem Halteschenkel über der Vorderseite eines Solarmoduls liegt und über eine Befestigungsschraube (SC4) mit einem vierten Halteelement (HE4) verbunden ist, wobei das vierte Halteelement eine von dem Solarmodul weg weisende Haltekante (K4) eines Modulträgers (MTU) der Traganordnung hintergreift und sich auf der bezüglich der Befestigungsschraube der Haltekante abgewandten Seite an der Rückseite (RS) des Solarmoduls (SR) abstützt.

3. Solaranlage nach einem der Ansprüche 1 bis 2, **dadurch gekennzeichnet, dass** die Höhe des ersten Halteelements geringfügig geringer ist als die Dicke des Solarmoduls, und/oder dass die Höhe des Fortsatzes (F2) des zweiten Halteelements (HE2) im wesentlichen gleich der Dicke der Zwischenplatte (ZP) ist.

4. Solaranlage nach einem der Ansprüche 2 oder 3, **dadurch gekennzeichnet, dass** bei einer zweiten Halterung ein erstes Halteelement (HE13) mit seinem Befestigungsschenkel die Zwischenplatte bildet und das erste und zweite Halteelement (H13, H2) mit ihren jeweiligen Halteschenkeln (HS13, HS2) über der Vorderseite je eines von zwei benachbart angeordneten Solarmodulen (SU1, SU2) liegen.

5. Solaranlage nach einem der Ansprüche 2 bis 4, **dadurch gekennzeichnet, dass** zwischen Vorderseite des Solarmoduls und Halteschenkel bzw. Halteabschnitt eines Halteelements und/oder zwischen Rückseite des Solarmoduls und Auflagefläche der Traganordnung elastisch verformte und rutschhemmende Zwischenlagen (EV, EH, ER) eingefügt sind.

6. Solaranlage nach einem der Ansprüche 2 bis 5, **dadurch gekennzeichnet, dass** das vierte Halteelement (HEU) auf seiner der Haltekante (K4) des Modulträgers (MT4) bezüglich der Befestigungsschraube (SC4) abgewandten Seite einen zur Rückseite des Solarmoduls parallelen Auflageschenkel (SU6) aufweist, welcher mittels der Befestigungsschraube gegen die Rückseite (RS) des Solarmoduls (SR) verspannt ist.

7. Solaranlage nach einem der Ansprüche 1 bis 6, **dadurch gekennzeichnet, dass** die Auflagefläche der Traganordnung an wenigstens einem für mehrere Solarmodule gemeinsamen Modulträgerprofil ausgebildet ist.

8. Solaranlage nach Anspruch 7, **dadurch gekennzeichnet, dass** auf einer Traganordnung gehaltene Solarmodule einreihig in Richtung der Modulträgerprofile aufeinander folgend angeordnet sind.

9. Solaranlage nach Anspruch 1, **dadurch gekennzeichnet, dass** wenigstens eine der Halterungen ein erstes und ein zweites Klemmteil enthält, von welchen das erste Klemmteil auf der Traganordnung aufliegt und eine Anlagefläche für die Rückseite des Solarmoduls bildet und das zweite Klemmteil an der Vorderseite des Solarmoduls anliegt und mittels einer Befestigungsschraube gegen die Traganordnung verspannt ist, wobei zwischen der Rückseite des Solarmoduls und der Traganordnung das zweite Klemmteil einliegt.

10. Solaranlage nach Anspruch 9, **dadurch gekennzeichnet, dass** beidseitig der Befestigungsschraube Stützstrukturen die beiden Klemmteile gegeneinander abstützen, wobei die beiden Klemmteile durch gegenseitigen formschlüssigen Eingriff quer zur Befestigungsschraube relativ zueinander in definierter Position angeordnet sind.

11. Solaranlage nach einem der Ansprüche 9 oder 10, **dadurch gekennzeichnet, dass** die beiden Klemmteile quer zur Befestigungsschraube relativ zu dieser um ein begrenztes Maß verstellbar sind.

12. Verfahren zur Herstellung eines Halteelements einer Halterung zur Befestigung von Solarmodulen an einer Traganordnung, **dadurch gekennzeichnet, dass** das Halteelement mittels nur eines Werkzeugs aus einem Stranggußprofil hergestellt wird.

13. Verfahren nach Anspruch 12, **dadurch gekennzeichnet, dass** unterschiedliche Varianten des Halteelements mit diesem Werkzeug hergestellt werden.

14. Verfahren nach Anspruch 12, **dadurch gekennzeichnet** verschiedene Varianten eines Halteelements unterschiedliche Breiten aufweisen.

15. Verfahren nach Anspruch 13 oder 14, **dadurch gekennzeichnet, dass** verschiedene Varianten eines Halteelements unterschiedliche Klemmhöhen aufweisen.
